# EUROPEAN PATENT APPLICATION

(11) **EP 4 390 489 A1**
(43) Date of publication of application: **26.06.2024**
(21) Application number: 23216841.9
(22) Date of filing: 14.12.2023
(51) Int. Cl.: G02B 6/44

(54) **OPTICAL CABLE FOR BLOWN INSTALLATION**

(30) Priority: 20.12.2022 IT 202200026130
(71) Applicant: Prysmian S.p.A., 20126 Milano (IT)
(72) Inventor: SUTEHALL, Ralph, EASTLEIGH, SO50 6YU (GB); SANTAMARIA, Susanna, EASTLEIGH, SO50 6YU (GB); LUCAS, George Stephen, EASTLEIGH, SO50 6YU (GB)
(74) Representative: Pietra, Giulia

(57) **Abstract**

It is disclosed an optical cable for blown installations comprising a central strength member comprising at least one optical fibre and a resin layer encasing the at least one optical fibre; at least one tube arranged about the central strength member and loosely housing at least one further optical fibre; and an outer jacket surrounding the least one tube. Also disclosed are an apparatus and a method for manufacturing such optical cable.

## Description

### BACKGROUND

The present disclosure relates to optical cables for blown installation. In particular, the present disclosure relates to an optical cable for blown or overblown installation having a high fibre density. The present disclosure also relates to a method and apparatus for manufacturing such an optical cable.

### STATE OF THE ART

Optical cables are commonly deployed by installing them in ducts by blowing or pulling, burying them in the ground, or suspending them between above-ground poles.

One method of installing an optical cable in a duct comprises blowing the cable into the duct (or overblowing, in the case the duct already contains an active optical cable) using gaseous flow which is fed into an inlet end of the duct together with the cable. The length of optical cable which can be blown into the duct can be increased by applying an additional pushing force to the cable at the inlet end of the duct.

In the following of the description and claims as "blown" and the derivatives will be referred to both the blown and the overblown, unless specifically indicated.

Unlike cables which are to be pulled through ducting, optical cables for blown installation do not have to withstand high tensile loads, but they require a degree of stiffness for the application of the gaseous flow. Besides, in order to maximize the blowing performance of an optical cable (in term of distance of deposition achieved), it is advisable that the optical cable has a neutral bending axis. Multi loose tube (MLT) optical cables exhibit this property and are accordingly often used for blown installation.

An MLT optical cable in general comprises a core made of a plurality of tubes arranged about a central strength member. The central strength member provides stiffness to the optical cable, as required for blown installation. Each tube loosely houses a number of optical fibers. The cable also comprises an outer sheath surrounding the core.

WO 2002/012943 discloses an optical cable for blown installation whose central strength member is tubular and has a peripheral wall enclosing a passage extending along the length of the central strength member. A tube member loosely housing optical fibres may be accommodated within the passage of the central strength member.

US 7,027,697 discloses an optical cable for blown installation which also includes, in addition to the loose tubes stranded about the central strength member and the outer jacket, also a conduit configured to receive blown optical fibres and positioned external to the central strength member. The central strength member may include a bore configured to receive central blown optical fibres.

### SUMMARY

The need for optical cables for blown installation with fibre counts of 48 or more and outer diameters of less than 5.0 mm has emerged from the network operators.

While known MLT optical cables allow reaching fibre counts of 48 or more, an overall cable diameter of less than 5.0 mm in general requires that the central strength member has a very small diameter, typically 1.0 mm. Such a small diameter of the central strength member reduces the cable stiffness, and therefore worsens the blowing performance of the MLT cable (in term of distance of deposition achieved). Moreover, a small diameter of the central strength member results in a reduced stiffness of the central strength member itself, which could then break during the blown installation procedure.

These considerations could apply to the optical cables described by WO 2002/012943 and US 7,027,697, whose central strength member is moreover hollow to loosely house optical fibres, and accordingly may entail an even more severe reduction of the cable stiffness and of the stiffness of the central strength member itself.

The Applicant has then faced the problem of providing an optical cable for blown installation which overcomes the aforesaid drawbacks.

In particular, the Applicant has tackled the problem of providing an optical cable for blown installation which exhibits both an adequate stiffness and a high fibre density, where "fibre density" indicates the ratio between the fibre count of the optical cable (namely, the number of optical fibres comprised in the optical cable) and the outer diameter of the optical cable.

According to embodiments of the present disclosure, this problem is solved by an optical cable for blown installation comprising a central strength member comprising at least one optical fibre and a resin layer encasing the at least one optical fibre; at least one tube arranged about the central strength member and at least one further optical fibre loosely housed in the least one tube; and an outer sheath surrounding the least one tube.

This construction of the optical cable allows to provide a high fibre density, while preserving the blowing properties (in particular, the stiffness) of the optical cable. Given a certain fibre count requested by the network operator, indeed, such fibre count may be suitably distributed between the central strength member and the tube(s) arranged about the central strength member. For example, the number of optical fibres encased in the resin layer of the central strength member may be kept below or equal to a maximum value (e.g. 12) which guarantees that the central strength member (and, hence, the whole optical cable) exhibits a stiffness adequate for blowing installation. The rest of the requested fibre count is instead loosely arranged in the tube(s) about the central member.

The obtained optical cable exhibits a particularly high fibre density. As it will be discussed in detail herein below, the Applicant has indeed estimated that high fibre counts (namely, fibre counts higher than 72) may be obtained with an overall diameter of the optical cable lower than 5 mm.

Therefore, according to a first aspect, the present disclosure provides an optical cable for blown installation comprising:
- a central strength member comprising at least one optical fibre and a resin layer encasing the at least one optical fibre;
- at least one tube arranged about the central strength member and loosely housing at least one further optical fibre; and
- an outer sheath surrounding the least one tube.

In an embodiment, the at least one tube is in direct contact with an outer surface of the resin layer of the central strength member.

The at least one tube may be wounded or oscillated about the central strength member. Alternatively, the at least one tube may be laid parallel to a longitudinal axis of the optical cable.

In an embodiment, the optical cable further comprises a water blocking material within the outer sheath. The water blocking material may at least partially embed the at least one tube.

In an embodiment, the central strength member may comprise at most 12 optical fibres.

The optical cable may comprise at most 6 tubes arranged about the central member.

Each tube may loosely house at most 24 further optical fibres.

In an embodiment, each of the central strength member and the at least one tube has diameters comprised between 0.9 mm and 1.5 mm.

In an embodiment, the central strength member and the at least one tube have substantially the same diameter.

In an embodiment, the resin layer of the central strength member comprises at least one acrylate material.

In an embodiment, the central strength member comprises a resin layer composed of first layer of first resin material and a second layer of second resin material radially outer to the first layer, wherein the second resin material has a secant modulus higher than a secant modulus of the first resin material.

In an embodiment, the secant modulus of the first resin material is between 0.5 MPa and 25 MPa.

In an embodiment, the secant modulus of the second resin material is between 500 MPa and 1000 MPa.

According to a second aspect, the present disclosure provides a method for manufacturing an optical cable for blown installation, the method comprising:
- encasing at least one optical fibre in a resin layer;
- curing the resin layer to obtain a central strength member;
- arranging about the resin layer at least one tube loosely housing at least one further optical fibre; and
- extruding an outer sheath in a radially outer position with respect to the at least one tube.

According to a third aspect, the present disclosure provides an apparatus for manufacturing an optical cable for blown installation, the apparatus comprising:
- at least one resin applicator for applying at least one resin material on at least one optical fibre and at least one curing device for curing the at least one resin material;
- a guide for providing at least one tube loosely housing at least one further optical fibre about the resin material; and
- an extruder for forming an outer sheath around the at least one tube.

In the present description and claims:
- the term "radial" and the related terms are used to indicate a direction perpendicular to a reference longitudinal axis of the optical cable;
- the expressions "radially inner" and "radially outer" are used to indicate a position along a radial direction with respect to the above-mentioned longitudinal axis;
- a size along the radial direction is termed "thickness"; and
- the verb "to encase" means to completely surround and directly contact from the outside.

The Shore hardness has been evaluated according to ISO 868 (2003-03-01). The tensile strength, the elongation at break and the secant modulus have been evaluated according to ISO 527-1 (2012).

For the purpose of the present description and of the appended claims, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

For the purpose of the present description and of the appended claims, the words "a" or "an" should be read to include one or at least one and the singular also includes the plural unless it is obvious that it is meant otherwise. This is done merely for convenience and to give a general sense of the disclosure.

The present disclosure, in at least one of the aforementioned aspects, can be implemented according to one or more of the present embodiments, optionally combined together.

### BRIEF DESCRIPTION OF DRAWINGS

The present disclosure will provide further particulars in the following detailed description, given by way of example and not of limitation, with reference to the following drawings, wherein:
- Figure 1 shows a cross-section of an optical cable for blown installation according to an embodiment of the present disclosure; and
- Figures 2 and 3 schematically show an apparatus for carrying out the process for manufacturing the optical cable according to an embodiment of the present disclosure.

### DETAILED DESCRIPTION

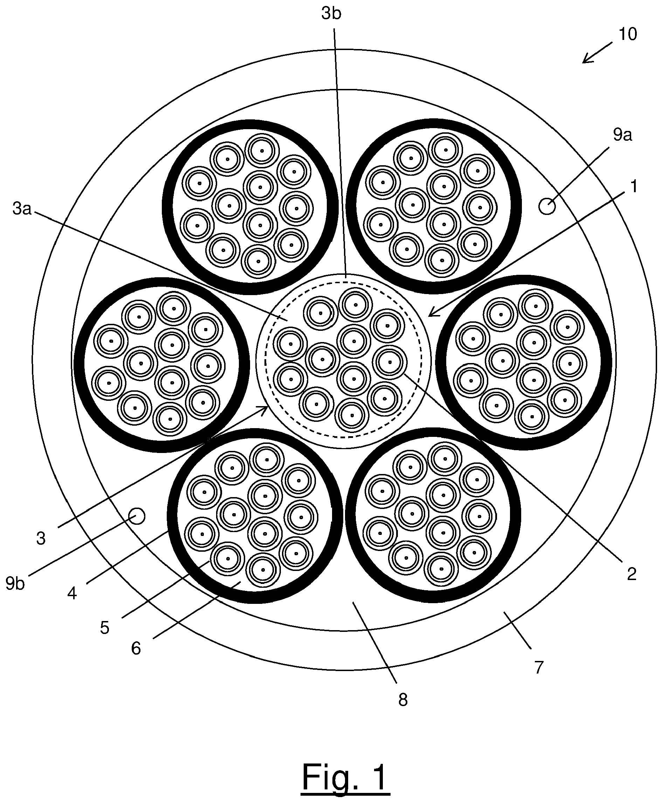

Figure 1 shows a cross-section of an optical cable 10 for blown installation according to an embodiment of the present disclosure.

The optical cable 10 comprises a central strength member 1 comprising at least one optical fibre 2 and a resin layer 3.

Each optical fibre 2 comprises a glass core comprising an optical waveguide, for example a single mode optical waveguide, and a cladding surrounding the waveguide. A first polymeric coating surrounds the cladding and a second polymeric coating, optionally coloured, surrounds the first polymeric coating. According to embodiments, each optical fibre 2 may further comprise a third polymeric coating, for example an ink layer, surrounding the second polymeric coating.

Each optical fibre 2 can have an outer diameter of from 150 µm to 300 µm, for example from 180 µm to 250 µm.

The optical fibres 2 may be arranged longitudinally (namely, parallel to the longitudinal axis of the optical cable 10). In an embodiment, the central strength member 1 comprises a number of optical fibres 2 chosen so as to provide the central strength member 1 with a suitable stiffness for blown installation. For example, the minimum number Nₘᵢₙ of optical fibres 2 in the central strength member 1 may be equal to 8, and the maximum number Nₘₐₓ of optical fibres 2 may be equal to 12.

The resin layer 3 is a resin solid matrix which encases the optical fibres 2, where "encases" means that the resin completely surrounds the bundle of optical fibres 2 and directly contacts them from the outside. The resin however does not necessarily penetrate amongst the bundled optical fibres 2, namely it does not necessarily fill the voids and gaps among the optical fibres 2.

The resin layer 3 has an outer diameter between, for example, 0.9 mm and 1.5 mm, depending on the number of optical fibres 2 and their outer diameter. For example, with 12 optical fibres 2 having a fibre diameter ranging from 180 µm to 250 µm, the resin layer 3 has a diameter ranging from 0.96 mm to 1.3 mm.

The resin layer 3 may be made of a soft resin material which cushions the optical fibres 2. For example, the resin layer 3 may be made of a thermoplastic or thermosetting plastic material derived from acrylic acid, methacrylic acid or other related compounds. For example, the resin layer 3 comprises an acrylate resin. The acrylate resin of the resin layer 3 may be an ultraviolet (UV) curable acrylate resin.

According to the embodiment shown in Figure 1, the resin layer 3 comprises at least two layers, namely a first layer 3a and a second layer 3b. The first layer 3a and second layer 3b may be made of, respectively, a first and second resin material having secant modulus different one from the other, with the second resin material having a secant modulus higher than that of the first resin material. Without wishing to be bound to any theory, the lower secant modulus of the first resin material could prevent transferring external forces acting on the optical cable 10 (and then on the central strength member 1) to the optical fibres 2, while allowing easy removal from the optical fibres 2 without damaging them during installation in the field.

As "secant modulus" it is meant the slope of a line between the 0 point and a point at 2.5% strain in the stress-strain curve of the material under measurement, tested at 25°C and 50% relative humidity.

In an embodiment, the secant modulus of the first resin material is between 0.5 MPa and 25 MPa, for example between 0.6 MPa and 10 MPa, for example 1 MPa. Further, the secant modulus of the second resin material may be between 500 MPa and 1000 MPa, for example between 600 MPa and 750 MPa, for example 668 MPa.

The first layer 3a may have a diameter between about 50% and about 90% of the outer diameter of resin layer 3, for example about 85%. The outer diameter of the resin layer 3 is the outer diameter of the second layer 3b.

The first layer 3a may substantially surround all the optical fibres 2, so that there is at least some material with a thickness of about 1 µm to about 10 µm between two adjacent optical fibres 2 over the majority of the length.

In an embodiment, the first resin of the first layer 3a comprises a matrix material with a high elongation at break, for example higher than about 130%.

In an embodiment, the second resin of the second layer 3b comprises a hard, fast curing matrix material. For example, the second resin has a Shore D hardness of from 30 to 80 when cured.

The optical cable 10 also comprise at least one tube 4 which, in the present case, are six tubes 4 arranged about the central strength member 1. Each tube 4 loosely houses a plurality of optical fibres 5.

Each optical fibre 5 comprises a glass core comprising an optical waveguide, for example a single mode optical waveguide, and a cladding surrounding the waveguide. A first polymeric coating surrounds the cladding and a second polymeric coating, optionally coloured, surrounds the first polymeric coating. According to embodiments, each optical fibre 5 may further comprise a third polymeric coating, for example an ink layer, surrounding the second polymeric coating.

Each optical fibre 5 can have a fibre outer diameter of from 150 µm to 300 µm, for example from 180 µm to 250 µm. The optical fibres 5 may have a same diameter as the optical fibres 2, or a different diameter.

Within each tube 4, the optical fibres 5 may be arranged in a bundle. In an embodiment, each tube 4 comprises a maximum number N'ₘₐₓ of optical fibres 5. For example, the maximum number N'ₘₐₓ of optical fibres 5 in each tube 4 may be equal to 24.

The tubes 4 may be arranged longitudinally about the central strength member 1, namely parallel to the longitudinal axis of the optical cable 10. Alternatively, the tubes 4 may be oscillated about the central strength member 1 according to an open helix or "S-Z" pattern. Alternatively, the tubes 4 may be helically wound about the central strength member 1. Optionally, the tubes 4 may directly contact the outer surface of the resin layer 3 of the central strength member 1.

The tubes 4 may be arranged to be in direct contact with the central strength member 1, i.e. in direct contact with the resin layer 3 thereof.

The optical cable 10 may comprise up to six tubes 4 arranged about the central strength member 1. By way of non-limiting example, the optical cable 10 shown in Figure 1 comprises six tubes 4 arranged about the central strength member 1.

The outer diameter of each tube 4 may be substantially equal to the outer diameter of the central strength member 1. In an embodiment, the outer diameter of each tube 4 is comprised between 0.9 mm and 1.5 mm, for example it is equal to about 1.1 mm or 1.3 mm.

The tubes 4 may be made of a polyester material, e.g. a polybutylene terepthalate (PBT) resin, or of polypropylene, medium density polyethylene (MDPE) or high density polyethylene (HDPE). The thickness of the wall of the tubes 4 may be comprised between 0.03 mm and 0.07 mm.

A water blocking compound 6 (in form, for example, of grease or gel) may be provided within each tube 4, to fill any space about the optical fibres 5 and among the optical fibres 5, so as to reach a filling of at least 95% of the space among the optical fibres 5 and the internal surface of the tube 4.

The optical cable 10 also comprises an outer sheath 7 arranged about the tubes 4. The outer sheath 7 may be formed from an uncrosslinked high density polyethylene (HDPE). In any case, the material of the outer sheath 7 may be selected such that the coefficient of friction between the optical cable 10 and the duct in which the optical cable 10 is blown is lower than 0.12, measured using the inclined plane test defined by the European standard PD IEC/TR 62470:2011.

The thickness of the outer sheath 7 may be comprised between 0.3 mm and 0.5 mm, for example it is equal to about 0.4 mm.

A water blocking compound 8 (in form of grease or gel or longitudinally provided yarns) may be provided within the outer sheath 7, to fill any space about the tubes 4 which would otherwise be void.

The optical cable 10 may also comprise at least one ripcord. By way of non-limiting example, the optical cable 10 shown in Figure 1 comprises two ripcords 9a, 9b. In the present embodiment, the ripcords 9a, 9b are arranged close to the inner wall of the outer sheath 7. In the present embodiment, the ripcords 9a, 9b are arranged at substantially diametrically opposed positions relative to the central strength member 1. The ripcords 9a, 9b advantageously ease removal of the outer sheath 7 for accessing the tubes 4 and central strength member 1.

This construction of the optical cable 10 allows providing a high fibre density, while preserving the blowing properties (in particular, the stiffness) of the optical cable 10. Given a certain fibre count requested by the network operator, indeed, such fibre count may be suitably distributed between the central strength member 1 and the tubes 4 arranged about the central strength member 1. For example, the number of optical fibres 2 encased in the resin layer 3 of the central strength member 1 may be kept from a minimum value Nₘᵢₙ (e.g., 8) which guarantees that the central strength member 1 (and, hence, the whole optical cable 10) exhibits a stiffness adequate for blowing installation, to maximum value Nₘₐₓ (e.g. 12). The rest of the requested fibre count may be instead loosely arranged in the tubes 4 about the central strength member 1.

The obtained optical cable 10 exhibits a particularly high fibre density in a small cable size. The Applicant has indeed estimated that high fibre counts (namely, fibre counts higher than 72) may be obtained with an overall diameter of the optical cable lower than 5 mm.

For example, Table I herein below shows two exemplary optical cables according to embodiments of the present disclosure. Both the exemplary optical cables comprise a central strength member in which 12 optical fibres are encased and, about the central strength member, 6 tubes loosely housing further optical fibres. All the optical fibres of both the exemplary cables have a diameter of 200 µm. For both the exemplary cables, the outer sheath has a thickness of 0.4 mm.

**Table I**

| | **Cable A** | **Cable B** |
|---|---|---|
| diameter of tubes | 1.1 mm | 1.3 mm |
| diameter of central strength member | 1.1 mm | 1.3 mm |
| No. optical fibres per tube | 12 | 24 |
| fiber count of the cable | 12+(12x6) = 84 | 12+(24x6) = 156 |
| cable diameter | 4.1 mm | 4.8 mm |

Cable A comprises central strength member and tubes with a diameter of 1.1 mm. 12 optical fibres are arranged in each tube, such that the overall fibre count is 84. The cable diameter is 4.1 mm.

Cable B instead comprises central strength member and tubes with a diameter of 1.3 mm. As the diameter of the tubes of Cable B is larger than that of the tube of Cable A, an increased number of optical fibres, namely 24 optical fibres, may be loosely housed in each tube of Cable B. The overall fibre count is therefore 156, while the cable diameter is 4.8 mm. It may be appreciated that the fibre count of Cable B is almost doubled relative to Cable A, while the increase in the cable diameter is of less than 1 mm.

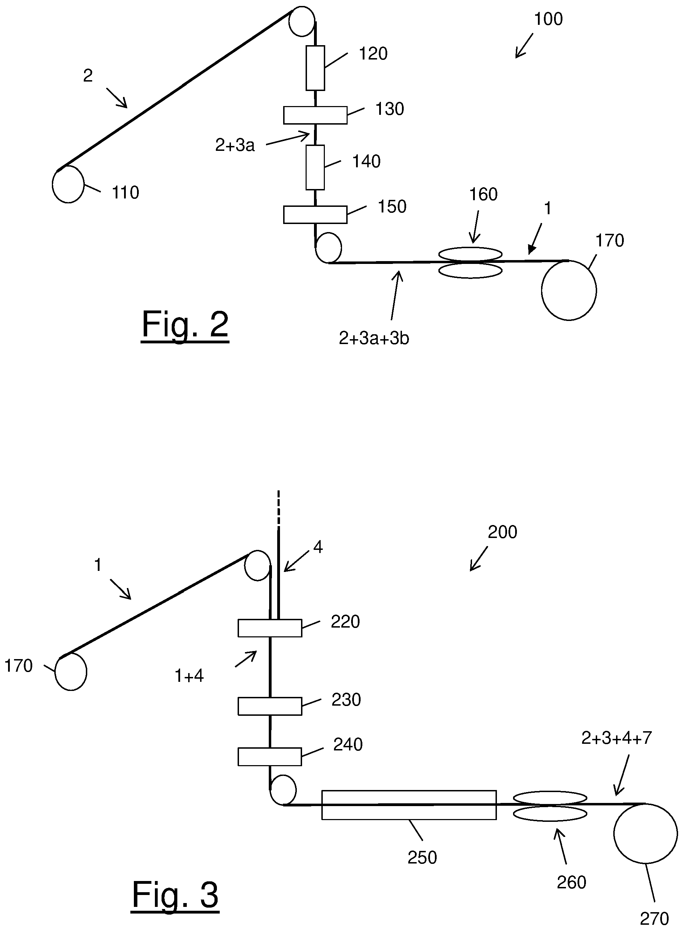

With reference to Figures 2 and 3, an apparatus for manufacturing the optical cable 10 according to an embodiment of the present disclosure will be described in detail.

The apparatus comprises a first stage and a second stage cascaded thereto.

The first stage 100, shown in Figure 2, is configured to manufacture a central strength member 1 comprising the resin layer 3 with the optical fibres 2 encased therein.

In the first stage 100, a number of optical fibres 2 are unwound from a corresponding number of bobbins 110. According to an embodiment of the disclosure, the optical fibres 2 are passed through a first resin applicator 120 for applying the first layer 3a of resin. After the first resin applicator 120, a first curing source 130 is provided. Such first curing source 130 could comprise a UV lamp or the like for curing the first layer of resin 3a.

As shown in Figure 2, a second applicator 140 for applying the second layer 3b of resin may be provided and followed by a second curing source 150. Such second curing source 150 could comprise a UV lamp or the like for curing the resin of the second layer 3b.

The first stage 100 of the apparatus could also comprise a capstan 160 before a take-up station 170.

The second stage 200 of the apparatus, shown in Figure 3, is configured to provide the tubes 4 with the optical fibres 5 loosely housed therein and the outer sheath 7 onto the central strength member 1 provided by the first stage 100.

In the second stage 200, a number of tubes 4 in which optical fibres 5 are loosely housed are passed through a guide 220, by which they are arranged (longitudinally, helically or oscillated) about the central strength member 1. The stages assembling the tubes 4 with the optical fibres 5 loosely housed therein are not shown in Figure 3 and will not be described in detail. Then, the central strength member 1 comprising the resin layer 3 with optical fibres 2 embedded therein and tubes 4 arranged about it may be passed through a tip 230, which injects the water blocking material onto the tubes 4, so that the water blocking material can penetrate amongst the tubes 4 and possibly embed them. The collection of resin layer 3, tubes 4 and, optionally, water blocking material is then passed through an extruder 240, which extrudes the outer sheath 7 upon the tubes 4 and, optionally, water blocking material. The optical cable 10 is then passed through a cooling trough 250.

Finally, a capstan 260 and a take-up arrangement 270 can be provided.

## Claims

1. An optical cable (10) for blown installation comprising:
- a central strength member (1) comprising at least one optical fibre (2) and a resin layer (3) encasing the at least one optical fibre (2);
- at least one tube (4) arranged about the central strength member (1) and loosely housing at least one further optical fibre (5); and
- an outer sheath (7) surrounding the least one tube (4).

2. The optical cable (10) according to claim 1, wherein the at least one tube (4) is in direct contact with an outer surface of the resin layer (3) of the central strength member (1).

3. The optical cable (10) according to claim 1, wherein the at least one tube (4) is wounded or oscillated about the central strength member (1).

4. The optical cable (10) according to claim 1, wherein the at least one tube (4) is laid parallel to a longitudinal axis of the optical cable (10).

5. The optical cable (10) according to claim 1, further comprising a water blocking material (8) within the outer sheath (7), the water blocking material (8) at least partially embedding the at least one tube (4).

6. The optical cable (10) according to claim 1, wherein the central strength member (1) comprises from 8 to 12 optical fibres (2).

7. The optical cable (10) according to claim 1, wherein the optical cable (10) comprises at most 6 tubes (4) arranged about the central member (1).

8. The optical cable (10) according to claim 7, wherein each tube (4) loosely houses at most 24 further optical fibres (5).

9. The optical cable (10) according to claim 1, wherein the central strength member (1) and the at least one tube (4) have diameters between 0.9 mm and 1.5 mm.

10. The optical cable (10) according to claim 1, wherein the central strength member (1) and the at least one tube (4) have substantially a same diameter.

11. The optical cable (10) according to claim 1, wherein the resin layer (3) comprises at least one acrylate material.

12. The optical cable (10) according to claim 1, wherein the resin layer (3) comprises a first layer (3a) of a first resin material and a second layer (3b) of a second resin material radially outer to the first layer (3a), wherein the second resin material has a secant modulus higher than a secant modulus of the first resin material.

13. The optical cable (10) according to claim 12, wherein the secant modulus of the first resin material is between 0.5 MPa and 25 MPa.

14. The optical cable (10) according to claim 12, wherein the secant modulus of the second resin material is between 500 MPa and 1000 MPa.

15. A method for manufacturing an optical cable (10) for blown installation, said method comprising:
- encasing at least one optical fibre (2) in a resin layer (3) to obtain a central strength member (1);
- arranging about the resin layer (3) at least one tube (4) loosely housing at least one further optical fibre (5); and
- extruding an outer sheath (7) in a radially outer position with respect to the at least one tube (4).

16. An apparatus (100, 200) for manufacturing an optical cable (10) for blown installation, the apparatus (100, 200) comprising:
- at least one resin applicator (120, 140) for applying at least one resin material (3a, 3b) on at least one optical fibre (2) and at least one curing device (130, 150) for curing the at least one resin material (3a, 3b);
- a guide (220) for providing at least one tube (4) loosely housing at least one further optical fibre (5) about the resin material (3a, 3b); and
- an extruder (240) for forming an outer sheath (7) around the at least one tube (4).
